Europäisches Patentamt

European Patent Office

Office européen des brevets

(11) Publication number: **0 500 035 A2**

# EUROPEAN PATENT APPLICATION

(21) Application number: **92102661.3**

(22) Date of filing: **18.02.92**

(51) Int. Cl.5: **G06F 15/72**

(30) Priority: **18.02.91 JP 45884/91**

(43) Date of publication of application:
**26.08.92 Bulletin 92/35**

(84) Designated Contracting States:
**DE FR GB**

(71) Applicant: **MITSUBISHI DENKI KABUSHIKI KAISHA**
**2-3, Marunouchi 2-chome Chiyoda-ku Tokyo(JP)**

(72) Inventor: **Nishide, Masashi, c/o Mitsubishi Denki K.K.**
**Computer Kenkyusho, 325, Kamimachiya Kamakura-shi, Kanagawa-ken(JP)**

(74) Representative: **Pfenning, Meinig & Partner Mozartstrasse 17**
**W-8000 München 2(DE)**

(54) **Three-dimensional graphic display system.**

(57) A three-dimensional graphic display system having an increased speed hidden-surface process capability. At a time when a depth buffer memory would be initialized in a conventional three-dimensional graphic display system, the depth buffer memory itself is not initialized and only bits of a high-speed memory corresponding to bits to be initialized in the depth buffer memory are initialized. When a hidden-surface process is executed, if the bits of the high-speed memory have been initialized, those initialization bits are changed to a non-initialized state and the latest Z coordinate data from a line generator is unconditionally written in the depth buffer memory. When the initialization bits of the high-speed memory are in a non-initialized state, a comparator compares Z coordinate data supplied from the depth buffer memory with the latest Z coordinate data supplied from the line generator. On the basis of the results of such comparison, a hidden-surface process is executed to display a three-dimensional graphic image.

The present invention relates to a three-dimensional graphic display system for displaying a three-dimensional graphic image by executing a hidden-surface process of graphic image.

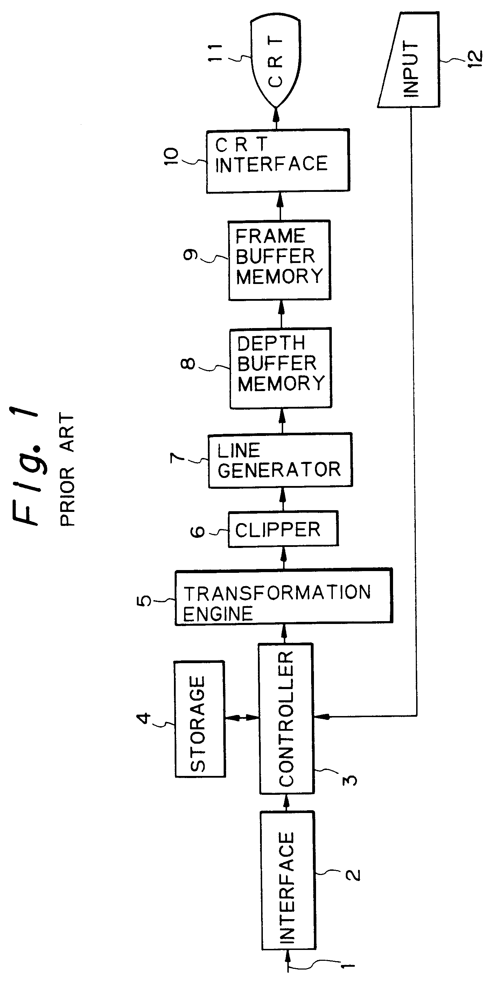

Fig. 1 is a block diagram showing an entire structure of a conventional three-dimensional graphic display apparatus. In this figure, an interface signal 1 from an electronic computer (not shown) is supplied to an interface circuit 2. The computer outputs display data and display commands through interface circuit 2 to a controller 3 where the received display data and display commands are converted to information having internal formats and then stored in a storage circuit 4. The data and commands stored in storage circuit 4 are input through transformation engine 5 and a clip processing circuit 6 to a line generator 7 on the basis of instructions issued from controller 3.

Line generator 7 is a coordinate data generating means for generating X, Y and Z coordinate data in a three-dimensional coordinate system. The outputs of line generator 7 are fed to a depth buffer memory 8 which stores coordinate data representing the depth of each pixel in order to execute a hidden-surface process of a graphic image on the basis of the X, Y and Z data supplied from line generator 7. X and Y coordinate data from line generator 7 and Z coordinate data from depth buffer memory 8 are input to a frame buffer memory 9 which stores display information to be used to display the graphic image on the basis of the data fed from line generator 7 and depth buffer memory 8.

The output of frame buffer memory 9 is connected through a CRT interface circuit 10 to a cathode ray tube 11. An input device 12 is connected to controller 3 to supply various input information thereto.

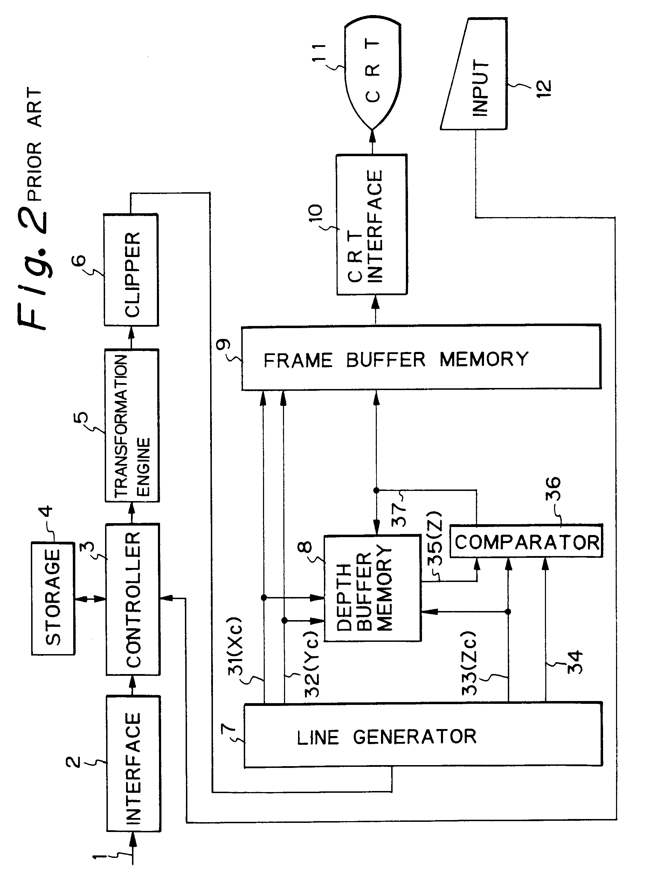

Fig. 2 is a block diagram showing a detailed structure including depth buffer memory 8 for executing a hidden-surface processing algorithm in the conventional three-dimensional graphic display apparatus. In this figure, the reference numerals 1 - 12 designate constituent components similar to those shown in Fig. 1, and therefore an explanation thereof will be omitted here. Line generator 7 generates X coordinate data 31, Y coordinate data 32 and Z coordinate data 33 in a three-dimensional coordinate system. It is assumed that current values of X, Y and Z coordinate data are Xc, Yc and Zc, respectively.

Line generator 7 also generates a strobe signal 34 for causing the respective coordinate data to be sampled. Depth buffer memory 8 reads out a Z coordinate data value 35. It is assumed that the read Z coordinate data value 35 is amount to Z. The Z coordinate value read out of depth buffer memory 8 and the Z coordinate data output from line generator 7 are compared in a comparator 36. When $Zc \leq Z$, comparator 36 outputs a flag signal 37 indicating this fact. This flag signal serves as a WRITE instructing signal to depth buffer memory 8 and a WRITE flag to frame buffer memory 9.

In operation, line generator 7 generates coordinate data sequentially from a start point to an end point on the basis of start point coordinate data (Xs, Ys, Zs) and end point coordinate data (Xe, Ye, Ze) and supplies these data to depth buffer memory 8 for the purpose of executing a hidden-surface processing algorithm. Depth buffer memory 8 reads out coordinate data 35 (Z) from a depth buffer memory location addressed by coordinate data 31 (Xc) and 32 (Yc) extracted from coordinate data (Xc, Yc, Zc) output from line generator 7. If $Zc \leq Z$, coordinate data 33 (Zc) is written in that memory location, and coordinate data Xc and Yc and update flag 37 indicating the content of depth buffer memory 8 has been updated are fed to frame buffer memory 9. If depth buffer memory 8 is not updated, neither coordinate data Xc and Yc nor update flag are input to frame buffer memory 9.

Upon receiving update flag 37, frame buffer memory 9 writes display information regarding preset brightness and hue at a location of frame buffer memory 9 addressed by coordinate data Xc and Yc. The data written in frame buffer memory 9 are read out thereof in accordance with display addresses generated by CRT interface circuit 10 and fed to CRT 11 to be displayed thereon. Input device 12 is used to supply necessary data to controller 3.

Since a depth buffer memory must have a large capacity of storage, a dynamic random access memory (DRAM) is usually used, because DRAMs are relatively cheap although they are disadvantageous in that they have slow access speed. Further, the depth buffer memory operates such in a hidden-surface process as to read out depth information (Z coordinate data) to cause the read information to be compared with the latest depth information and depth information to be updated. Consequently, the depth buffer memory is required to execute a READ-WRITE cycle and thus is slow in operating speed in comparison with a line generator and a frame buffer memory operating in synchronism with the depth buffer memory, resulting in difficulty in achieving higher hidden-surface processing speed in a conventional three-dimensional graphic display system.

As a prior art disclosing this type of hidden-surface process, there is Japanese Patent Public Disclosure No. 42279/1987 (published on February 24, 1987) which proposes an increase in efficiency of depth information comparison. According to the prior art, in the depth information comparison process, it is necessary to update a Z value on the basis of an AND condition of the following:

(i) No contour exists in a section n;

(ii) A Z value of a segment L is smaller than a Z value of the first pixel of a section n; and

(iii) A Z value of a segment L is smaller than a Z value of the first pixel of a section n + 1.

Thus such a process is complicated. In particular, when the AND condition is satisfied in processing item (ii) and then item (iii), it is necessary to return to section n and effect pixel processing in sequence. Accordingly, such a prior art is not suited for a hidden-surface process in a depth-buffer algorithm which is handled by a digital differential analyzer (DDA) of an accumulation and summation type.

The present invention has been proposed to solve such problems as described above, and it is an object of the present invention to provide a three-dimensional graphic display system based on the fact that graphic information actually required to be compared and updated in a hidden-surface process is only a part of the whole displayed graphic information.

According to a three-dimensional graphic display system of the present invention, READ-WRITE cycles are performed in a depth buffer memory only when patterns are actually overlapped and Z coordinate data (depth information) have to be compared with one another. When there is no necessity of comparison between Z coordinate data, only WRITE cycles are performed in the depth buffer memory, thereby speeding up a hidden-surface process executed in a three-dimensional graphic display system.

An embodiment of a three-dimensional graphic display system according to the present invention comprises:

a high-speed memory for storing initialized-state information representative of whether a depth buffer memory is in an initialized state or not on the basis of X and Y coordinate data supplied from a coordinate data generating means; and

a comparing means for comparing Z coordinate data stored in the depth buffer memory with the latest Z coordinate data supplied from the coordinate data generating means.

At a time when the depth buffer memory would be initialized in a conventional three-dimensional graphic display system, the depth buffer memory itself is not initialized in the present invention and, instead, only bits in the high-speed memory corresponding to bits to be initialized in the depth buffer memory are initialized. During a hidden-surface process, if the bits in the high-speed memory have been initialized, those bits are changed to a non-initialized state and the latest Z coordinate data supplied from the coordinate generating means are unconditionally written in the depth buffer memory. On the other hand, if the bits in the high-speed memory are in a non-initialized state, the comparing means compares Z coordinate data supplied from the depth buffer memory with the latest Z coordinate data supplied from the coordinate generating means. On the basis of the results of such comparison, a hidden-surface process is executed to display a three-dimensional graphic image.

According to the present invention, READ-WRITE cycles are performed in a depth buffer memory only when graphic images are overlapped and Z coordinate data are required to be compared. If there is no necessity for comparing Z coordinate data, only READ cycles are performed in the depth buffer memory. As a result, any process of initializing the depth buffer memory can be omitted, thereby providing a three-dimensional graphic display system having an increased speed hidden-surface process capability.

The above and other objects and advantages of the present invention will be more apparent from the following description of the invention with reference to the accompanying drawings.

Fig. 1 is a block diagram showing an entire structure of a conventional three-dimensional graphic display apparatus;

Fig. 2 is a block diagram of a circuit including a depth buffer memory of the three-dimensional graphic display apparatus shown in Fig. 1; and

Fig. 3 is a block diagram of an embodiment of a three-dimensional graphic display apparatus according to the present invention.

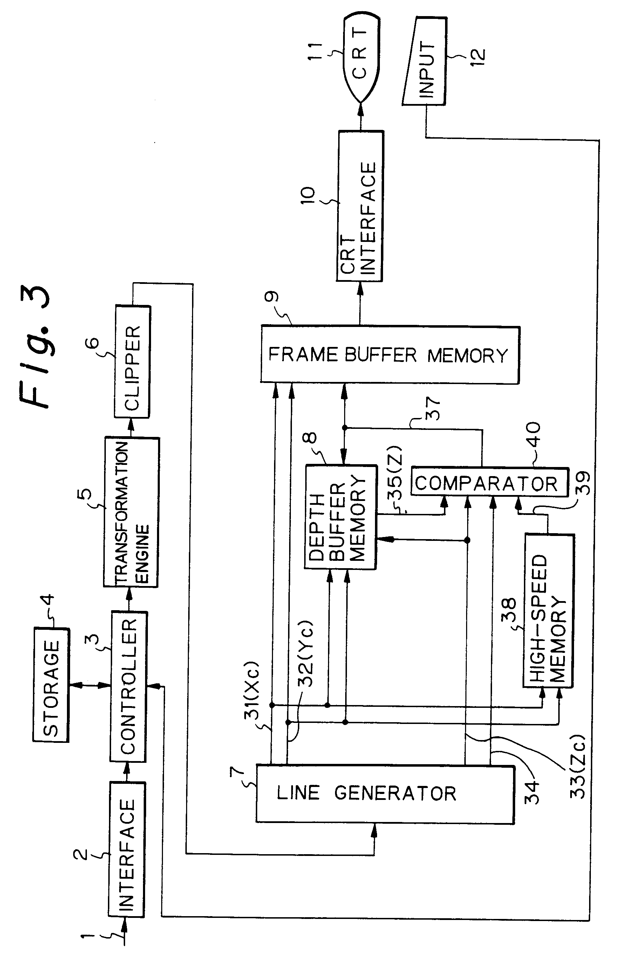

Fig. 3 is a block diagram of an embodiment of a three-dimensional graphic display apparatus employing a three-dimensional graphic display system according to the present invention. In this figure, the same reference numerals as used in Fig. 2 designate similar or like elements, and therefore an explanation thereof is omitted here.

In Fig. 3, the three-dimensional graphic display apparatus according to the present invention includes a high-speed memory 38 which stores initialization information, that is, initialization bits for indicating whether depth buffer memory 8 is in an initialized state on the basis of X coordinate data 31 (Xc) and Y coordinate data 32 (Yc) supplied from line generator 7. The symbols Xc and Yc are current values of X and Y coordinate data 31 and 32, respectively. X and Y coordinate data 31 (Xc) and 32 (Yc) indicate pixel addresses. High-speed memory 38 outputs initialized-state information 39 to a comparator 40 which is provided for comparing Z coordinate data 35 (Z) output from depth buffer memory 8 with the latest Z coordinate data 33 (Zc) supplied from line generator 7.

It is noted that the initialized state of depth buffer memory 8 is a state in which a Z coordinate value (Z coordinate data) of the point located furthest from a view point has been written in all pixel locations, depending on which type of processing coordinate system may be used, a content of the initialized state being a maximum value if the three-dimensional coordinate system is a left-hand system and zero if the three-dimensional coordinate system is a right-hand system. It is also noted that contents of the non-initialized state of depth buffer memory 8 are Z coordinate values of each pixel forming graphic image which is displayed at a current time.

In operation, high-speed memory 38 is initialized at a time when depth buffer memory 8 is to be initialized. In other words, depth buffer memory 8 stores the Z coordinate values of graphic image displayed at a current time. Comparator 36 compares the Z coordinate values of respective pixels of the graphic image displayed at a current time with the Z coordinate values of respective pixels of the graphic image to be displayed next, and decides whether the graphic image to be displayed next is nearer to or further from a view point with respect to the graphic image currently displayed.

It is noted that depth buffer memory 8 must be initialized at a time when a new drawing process should be begun in order to draw a new graphic image different from a currently displayed graphic image, that is, when memory 8 should be initialized. To the contrary, depth buffer memory 8 is not required to be initialized at such a time in this embodiment, because the respective addresses of high-speed memory 38 correspondingly indicate that depth buffer memory 8 has been initialized or has not been initialized (has been updated).

In a conventional hidden-surface process executed by a depth buffer memory, Z coordinate values of a pattern stored in a frame buffer memory are compared pixel by pixel with Z coordinate values of a pattern to be newly displayed, and a decision is made as to which of the patterns is closer to a view point. As a result, display information of the graphic image closer to the view point remains in the frame buffer memory. Consequently, prior to drawing a new pattern, it is necessary to initialize the whole area of a depth buffer memory to a maximum value of Z coordinate value or zero.

In the illustrated embodiment of the present invention, high-speed memory 38 is provided to serve as a flag indicating whether Z coordinate values written in depth buffer memory 8 are values already updated in a currently displayed pattern and usual Z coordinate values compared with the latest Z coordinate values or invalid Z coordinate values of the previous graphic image which are unconditionally replaced with Z coordinate values of a pattern to be displayed at a current time, thereby omitting any process of initializing depth buffer memory 8.

In the case of processing graphic information to produce a displayed three-dimensional graphic image, initialized-state information 39 is output from high-speed memory 38 when it is got access by pixel addresses formed by coordinate data 31 (Xc) and 32 (Yc) generated by line generator 7.

When initialized-state information 39 indicates an initialized state, Z coordinate data 35 (Z) from depth buffer memory 8 is invalid and the latest Z coordinate data 33 (Zc) supplied from line generator 7 are written in depth buffer memory 8. Then, display information is written in frame buffer memory 9, that is, only a WRITE cycle is performed therein. At this time, the corresponding address of high-speed memory 38 is updated to a non-initialized state.

When initialized-state information 39 does not indicate an initialized state, a usual hidden-surface process is executed and depth buffer memory 8 as well as frame buffer memory 9 are updated according to the results of comparison between Z coordinate data 33 (Zc) and Z coordinate data 35 (Z), and READ-WRITE cycles are performed in depth buffer memory 8. At this time, high-speed memory 38 is not required to be updated. Thus, a hidden-surface process is executed and a three-dimensional graphic image is displayed on CRT 11 using the data stored in frame buffer memory 9.

The present invention has been described in detail with particular reference to a certain preferred embodiment thereof, but it will be understood that variations and modifications can be effected within the spirit and scope of the present invention.

## Claims

1. A system for displaying a three-dimensional graphic image having at least one surface, comprising:

a coordinate data generating means for generating first and second coordinate data and depth data of a surface to be displayed, the depth data being representative of the depth of respective pixels forming the surface;

a depth buffer memory means for storing the depth data so as to execute a hidden-surface process on the basis of the first and second coordinate data and the depth data supplied from said coordinate data generating means;

a frame buffer memory means for storing display data to be used to display a three-dimensional graphic image on the basis of the first and the second coordinate data supplied from said coordinate data generating means and the depth data supplied from said depth buffer memory means;

an initialization information memory means for storing initialized-state information representative of whether said depth buffer memory means is in an initialized state on the basis of the first and the second coordinate data supplied from said coordinate data generating means; and

a comparing means for comparing the depth data supplied from said depth buffer memory means with the latest depth data supplied from said coordinate data generating means, wherein bits in said initialization information memory means corresponding to bits in said depth buffer memory means to be initialized are initialized, and wherein, in a hidden-surface process, when the initialized-state information indicates that said depth buffer memory means is in an initialized state, the initialized-state information is changed to indicate that said depth buffer memory means is in a non-initialized state and the latest depth data supplied from said coordinate data generating means are written in said depth buffer means, and, when the initialized-state information indicates that said depth buffer memory means is in a non-initialized state, said comparing means compares the depth data supplied from said depth buffer means with the latest depth data supplied from said coordinate data generating means so as to execute a hidden-surface process to display a three-dimensional graphic image.

EP 0 500 035 A2

# Fig. 1

PRIOR ART

*Fig. 2* PRIOR ART

EP 0 500 035 A2

Fig. 3

EP 0 500 035 A2